# EUROPEAN PATENT SPECIFICATION

(11) **EP 2 274 245 B1**
(45) Date of publication and mention of the grant of the patent: **25.03.2015**
(21) Application number: 09732650.8
(22) Date of filing: 17.04.2009
(51) Int. Cl.: C02F 3/32, C02F 3/06, C02F 3/22, C02F 3/30, C02F 3/28, C02F 103/00

(54) **A PHYTOSYSTEM, ITS USE AND METHOD FOR TREATMENT OF SEWAGE**
PHYTOSYSTEM, SEINE VERWENDUNG UND VERFAHREN ZUR BEHANDLUNG VON ABWASSER
PHYTOSYSTÈME, SON UTILISATION ET PROCÉDÉ DESTINÉ AU TRAITEMENT DES EAUX USÉES

(30) Priority: 17.04.2008 SE 0800884; 23.04.2008 US 47132; 29.05.2008 SE 0801268; 03.06.2008 US 58373
(43) Date of publication of application: 19.01.2011
(73) Proprietor: Alnarp Cleanwater Technology AB, 230 53 Alnarp (SE)
(72) Inventor: LAZAREK, Stanislaw, S-22479 lund (SE); LAWACZ Wlodzimiers, PL-05-092 Warsaw-Lomianki (PL)
(74) Representative: Stenbäck, Maria Elisabeth
(86) International application number: PCT/SE2009/000197
(87) International publication number: WO 2009/128765

(56) References cited:
- EP-A1- 0 458 760
- WO-A1-03/042114
- AU-B2- 618 248
- DE-A1- 2 148 996
- DE-C1- 19 939 917
- DK-U4- 9 300 418
- GB-A- 2 317 170
- GB-A- 2 329 634
- UA-A- 68 252
- US-A- 3 966 608
- US-A- 5 156 742
- US-A- 5 618 413
- US-A- 5 702 593
- US-A- 5 863 433
- US-A- 6 159 371
- US-A1- 2004 035 770
- US-A1- 2004 182 781
- US-A1- 2005 040 107
- LAZAREK S: "Decentralized biological wastewater treatment system", NOWRA CONFERENCE,, 12 March 2007 (2007-03-12), pages 1-5, XP003025862,
- DATABASE WPI Week 200376, Derwent Publications Ltd., London, GB; AN 2003-809229, XP003025568 & KR 2003 0 044 647 A (HYUNDAI CONSTR CO LTD) 09 June 2003
- LAWACZ W ET AL: 'Dynamic, closed loop, horizontal flow Phytoreactor' CONFERENCE ON CONSTRUCTED WETLANDS 01 September 2004, page 13, XP003025866
- KOSIARSKA A: "Treatment plant as a garden", MURATOR, WYDAWNICTWO MURATOR SP. Z O.O, PL, vol. 10, 1 January 2007 (2007-01-01), pages 206-208, XP003025861, ISSN: 0239-6866
- ANONYMOUS: "Decentralized system for sewage management in rural areas", CORDIS RTD-RESULTS/EUROPEAN COMMUNITIES,, 1 July 2003 (2003-07-01), page 1, XP003025864,
- "Abwasserreinigung mit Pflanzen", INTERNET CITATION, 9 July 2003 (2003-07-09), page 1, XP003025865, Retrieved from the Internet: URL:http://www.innovations-report.de/html/ berichte/umwelt_naturschutz/bericht-19784. html [retrieved on 2003-12-23]
- "Constructed wetlands - structure and design. Application to climatic and environmental conditions in Europe", 20030401, 1 April 2003 (2003-04-01), pages 1-2, XP003025863,

## Description

### Technical field

The present invention pertains to a phytosystem, dynamic septic system , and a container and, which combined offers a close-loop effective treatment of residential and industrial sewage in any climatic conditions and at arbitrary latitudes. The phytosystem also allows for reuse and recycling of effluent water, thus reducing demand on existing central water treatment systems and easing pressure on ground water reserves.

### Background art

There is a growing need for a sustainable solution to worldwide problems with management of decentralized wastewater sources, ground water pollution and shrinking water resources. Global problems with ground water contamination brought legislative changes in some countries. These changes follow the reality where wastewater systems can be dictated by growth rather than growth depending on existing central wastewater systems.

Decentralized systems should be sustainable, based on natural life cycles and economically affordable to people. Minimum energy should be used for their manufacturing and operation. They should be at least CO₂-neutral and allow for flexibility in nutrient recycling according to local conditions and demands.

Search for alternative low energy, low maintenance systems, including alternatives to conventional septic systems is of high interest to solve problems related to this technical field. The aim is to solve such problems by developing a simple permanent, robust phytosystem that can significantly improve public health and protect water quality in places with high degree of water-related diseases and with general shortage of water, but in the same time be cost-effective and environmentally appropriate.

Environmental concern, economics and logics speak for such alternative real-world solutions instead of traditional central collection and treatment plants. On the other hand, many commercially available 'green' onsite wastewater systems are not sustainable.

Patent application document KR 20030044647 A describes a membrane separation-type of a septic tank as an alternative solution to traditional tanks in Korea, which are of the type having 3-compartment septic systems. The essential part of the system is a container consisting of a semi-permeable composite membrane. Similar systems are also known as membrane bio-reactors (MBR). Membrane application to pre-treatment and treatment of sewage are commercialized by the Korean Hyundai Corp. and the Japanese Hitachi Zosen Corp. According to the KR 20030044647 description the cylindrical enclosure can be made of materials such as metal.

Moreover, the KR 20030044647 document describes that inlet and bypass can be square or unspecified. The opening in the transept wall is not serving as a deflecting mechanism. Such systems operate on activated sludge. Hence, there is no need for a scum barrier.

Also, the bio-bed is forming only a fraction of the compartment's volume. The internal cylindrical enclosure in document KR 20030044647 contains a membrane module for the final treatment of sewage where the module's principle function is to separate permeate from activated sludge. Permeate is than evacuated outside the system by a vacuum pump. Because of the activated sludge process the internal compartment in KR 20030044647 is normally actively aerated. Furthermore, permeate is leaving the system, and is not gravimetrically recycled for further reduction of nitrogen, and raw sewage cannot enter the sediment compartment gravimetrically.

Another patent application WO 03042114 A1 discloses a biological treatment systems where sewage flow is linear, 'plug flow'. In WO 03042114 excessive sludge or volatile suspended solids (VSS) are produced with a "low yield" VSS in effluent.

The publication "Decentralized biological wastewater treatment system" by S. Lazarek, Nowra conference, March 2007, p 1-5, discloses an on-site biological wastewater treatment and water reuse system.

The publication "Oczyszczalnia jak ogród", Murator, no 8, 2007, p 2-6, discloses wastewater purifying plants for gardens.

### Summary of the invention

The present invention offers effective pretreatment of residential sewage in any climate and at any latitude. The phytosystem also allows for reuse and recycling of effluent water, thus reducing demand on existing central water treatment systems and easing pressure on ground water reserves.

The present invention is defined by the appended claims.

The present invention thus sets forth a phytosystem adapted to offer effective treatment of at least one of residential and industrial sewage water. It comprises:
a pretreatment container for pretreatment of sewage water according to the attached claim 1, receiving the sewage water through an inlet connected to the at least one of the residential and industrial sewage water outlets;
a purifying container according to claim 3 receiving the pretreated sewage water pumped from the outlet of the pretreatment container through a connection with the inlet of the container; and
an outlet for discharging purified water.

In one embodiment of the present invention one of the container's outer compartments is provided with an anaerobic biological bed, and the inner compartment has serves for sedimentation of mineral solids and initial decomposition of cumulating biosolids.

One embodiment comprises that the pretreatment container's inner compartment is provided with a bio-bed adapted to an efficient final fixed-film pretreatment of the sewage.

Another embodiment comprises that the entire pretreatment container is positioned underground, thus allowing for a gravimetric recirculation of purified water from a phytosystem's purifying container.

Still another embodiment comprises that the pretreatment container receives raw sewage, when in operation, from clusters of households.

A further embodiment comprises that the pretreatment container is changing its mode of operation from anaerobic conditions enhancing high denitrification and phosphorus reduction, to aerobic conditions in the inner compartment, thus making possible a state of primary reduction of organic carbon (BOD) when in operation.

Yet a further embodiment comprises that a suitable part of purified water effluent from the phytosystem is recycled back to the anaerobic compartment of the pretreatment container when in operation.

Still yet one embodiment comprises an optimized biological process and stable temperature, resulting from effective heat exchange or heat conservation due to thermal insulation when standard poly urethane (PU) PVC containers are utilized, which reduces accumulation of biosolids and eliminates odors produced by conventional septic tank systems.

The present invention furthermore sets forth a container adapted to pretreatment of residential and industrial sewage water. Hereby it comprises:
at least one outer watertight wall with a lid having an inlet for raw sewage water and an outlet of pretreated sewage water both positioned at the upper ridge of the container;
an inner watertight wall making up an inner compartment comprising the outlet;
the outer wall and the inner wall making up an outer compartment;
a first watertight wall dividing the outer compartment in two parts from top to bottom of the outer compartment;
and a second wall dividing the outer compartment from the top of the container, down to an opening permitting sewage water to deflect and flow in a channel between the outer compartments' first and second walls, the second wall making up a scum barrier at the top of the outer compartment;
a bypass connecting the outer compartment and the inner compartment situated above a lower ridge of the inner wall, the bypass being positioned on the opposite side of the first wall where the raw sewage inlet is positioned; and
a pump means connected to the outlet in the inner compartment creating a sequential flow of fluids.

In one embodiment of the invention it is precast in modules utilizing composite light concrete reinforced with polymeric microfibers or a precast in modules from superlight polymeric material.

One embodiment provides a bio-bed when in operation that consists of prefabricated polyethylene tubular blocks of high porosity for bio-film development.

Another embodiment provides that the outer compartment receives raw sewage when in operation, through an inlet at the upper ridge of the channel next to the first wall, diagonally positioned in relation to the bypass to the internal tank thus allowing sewage to flow sequentially clockwise against the deflecting transept second wall, allowing for sedimentation of mineral solids and flotation of suspended organic particles and formation of surface scum.

A further embodiment provides that sediment-free raw sewage enters an anaerobic denitrifying bio-bed in the outer compartment of the channel and finally through the bypass next to the first wall between the channel and the internal tank when in operation, to a highly perforated substantially aerobic bio-bed in the inner compartment prior to a pump with a shunt outlet located above the upper ridges of the inner compartment.

A still further embodiment comprises that the inner compartment is filled with a high porosity prefabricated filling for aerobic pretreatment.

Moreover, the present invention sets forth a purifying container adapted to offer effective treatment of residential and industrial sewage water. It thus comprises:
an open to the atmosphere watertight at least one outer wall having an inlet for pretreated sewage water and an outlet for purified water both positioned at the upper ridges of the container;
an inner watertight wall making up an inner compartment;
the outer wall and the inner wall making up an outer compartment;
the inlet is adapted to release pretreated sewage water into the outer compartment in a sequential flow;
the outlet is positioned to release purified water from the inner compartment;
a first wall is watertight attached to the bottom of the outer compartment between the outer wall and inner wall reaching up to a level beneath the water level of the container;
a second and a third wall are each positioned on both sides of the first watertight wall attached to the outer wall and the inner wall protruding from the water level of the container towards the bottom of the container. The second wall and third wall are with equal openings in the bottom part, allowing fluid to pass through, and together with the first wall making up a waterfall and vortex effects in the channel for circulating of sewage water at the predetermined velocity and oxygen saturation;
a bypass for fluid to pass between the outer compartment and the inner compartment;
an aeration diffuser leading to air-lifting of fluid between the first transept wall and second transept wall leading to the waterfall flow between the first transept wall and the third transept wall to vortex recirculation of liquid in the outer compartment;
a pump means for pumping in predetermined doses of pretreated sewage and by means of hydraulic pressure difference leading to the outflow of equivalent doses of purified water through the outlet in the center of the inner cylindrical container; and
built out of precast modules of at least one of composite light concrete with micro-fibrous reinforcement, glass-fiber reinforced plastic, and polyurethane.

One embodiment comprises that the container is provided with an integrated biological bed consisting of selected aquatic and bog plants of at least one of the following four genus combinations sedge and bulrush, sedge and sweet-flag, bulrush and sweet-flag and sedge, and bulrush and reed, which in their extensive rhizosphere provide key habitats for sustaining a high invertebrate population, whereby intensive invertebrate grazing prevents excessive growth of biofilm and accumulation of biomass; and
water mynth and water-plantain are provided to the purifying container for their beneficial role in the biocenose and continuous supply of dissolved organic carbon; and
selected aquatic and bog plants with an extensive rhizosphere are provided in the purifying container for sustaining intensive microbial processes and invertebrate grazing in a biological bed, preventing any accumulation of biosolide or any odors being produced in decomposition processes.

One other embodiment comprises that it is to at least % parts of its height placed underground thus allowing for gravimetric outflow of purified water.

A further embodiment provides that it comprises an integrated biological bed when in operation, consisting of prefabricated polyethylene tubular blocks of high porosity with supporting media for selected aquatic and bog plants, the integrated biological bed occupying upper parts of the outer compartment, the remaining unobstructed space beneath the integrated biological bed allowing fast circulation of oxygenated water and dosed pretreated sewage.

Still a further embodiment comprises that it receives pretreated sewage when in operation, in regular doses from a primary septic system or from any other pretreatment device outside it.

Another embodiment comprises that it receives pretreated sewage water when in operation, through the inlet adjacent a bottom part of the outer compartment, the sewage being continuously circulated clockwise and aerated by a vortex mechanical device or air-pump causing horizontal rotation movement of high turbulence, whereby the predetermined velocity of flow prevents sedimentation of suspended particles.

Yet one embodiment comprises that purified water leaves the inner compartment when in operation, via a perforated vertical pipe closed at the bottom, and a shunt outlet located below the upper ridges of the inner compartment, the circulation channel, and the perforated vertical pipe optionally accommodating a coronary discharge ozone generator and an electronic monitoring device.

Yet a further embodiment comprises that a change of mode of operation to the vortex mechanical device allows a sequential aeration process, thus making possible controlled shifts between a state of high oxygen saturation for sustaining desirable high rates of organic carbon (BOD) reduction and nitrification, and a state of anoxic conditions.

Still yet a further embodiment comprises that the inner compartment (51) is filled with a mineral with high phosphorus adsorption capacity, wherein the water level at the outlet (62) determines the water level in the entire phytosystem.

One other embodiment comprises that at warmer places in the world, a cooling device is applied based on an additional outlet of purified water along the outer wall of the outer compartment.

A further embodiment comprises that the at least one circulation channel comprises a system of joint vessels, providing that any inflow of sewage to an outer channel causes an outflow of the equivalent amount of water from the inner compartment (51) due to the hydraulic pressure difference.

### Brief description of the drawings

Henceforth reference is had to the attached figures in the accompanying text of the description for a better understanding of the present invention with its embodiments and given examples, wherein:
**Fig. 1** schematically illustrates one embodiment of a phytosystem adapted to purify sewage in accordance with the present invention.
**Fig. 2** schematically illustrates a cross sectional view of a pretreatment container for initial pretreatment of sewage in accordance with the present invention;
**Fig**. **3** schematically illustrates a top view of a pretreatment container in Fig.2 for pretreatment of sewage in accordance with the present invention;
**Fig. 4** schematically illustrating a purifying container according to the present invention in a side elevation; and
**Fig. 5** schematically illustrating a purifying container according to Fig. 4 in a cut upper elevation view.

### Detailed description of preferred embodiments

The present invention is inspired by many years of corporate experience in lake restoration and in management of aquatic systems, combined with applied research on benthic microbial communities and metabolic interactions in freshwater littorals. Moreover, the present invention is a substantially simplified and a compacted biological system with respect to the construction, installation, operation and adaptability to any climatic conditions and a reduced space, uniquely small footprint, required for its installation and optimal performance. Practically, the phytosystem and containers of the present invention do not require any regular maintenance and they become an enriching component of the local environment.

In the course of applied research and microscopic observations, the conclusion arose that it can be possible to develop a system combining controlled circulation hydraulics and biological processes in a closed loop container. The dimensions of the container accommodating basic phytosystem appeared to be interdependent and hence essential to the function of the entire system. It was further observed that the heat exchange and heat transfer phenomena occurring in natural lake ecosystems can be mimicked in properly designed compartments. For balancing nutrient breakdown and nutrient transfer, observations of microbial processes occurring in lake littorals and in extensive rhizospheres of selected aquatic and bog plats where applied. Designs of physical and biological processes benefited from observations of differences in diversity and density of bacterial strains associated with certain rhizospheres and certain redox potential and conductivity conditions. The microstructure of an intimate root surface-bacteria relationship was also reflected in the density and composition of grazing invertebrates, ciliate protozoa in particular. The quality of purified water is reflected by presence of a unique zooplankton (crustaceans) community in the final stage of water purification. Such communities are known to occur normally in extremely oligotrophic lakes.

Thus, by combining and magnifying biological and physical processes occurring in natural ecosystems, it was possible to develop a complete biological solution according to the present invention. One technical obstacle was related to an environmentally appropriate material for repeatable industrial precast manufacturing or for an onsite construction of containers/vessels.

The phytosystem of the present invention represents functional integration of optimized physical and microbial processes and interactions comprising the elements found in the following natural ecosystems: fast flowing brook, waterfall, freshwater wetland and, hydroponic (*plaur*) community. It is contained in and engineered to an optimally dimensioned construction framework. Of particular value to the high performance of the phytosystem is the practical application of trophic and synergic relationships between plant root systems (rhizosphere), bacteria and grazing invertebrates (protozoa). Aquatic plants applied in or provided to the phytosystem of the present invention were selected according to their observed physiological features, extensive root systems that sustain high population of grazers preventing excessive growth of biofilm or accumulation of excessive biosolids.

Hence, the phytosystem benefits from heat exchange between the ground and the water and energy conservation within the system in operation. Because of the applied vortex flow and aeration mechanism, the geo-heat transfer to water and to the bio-bed is highly effective and stable which is reflected in intensive biological activity year round. In warmer parts of the world, the same vortex circulation enhances cooling effect due to transfer of heat from the liquid environment to the outer wall cooled by an additional outlet of purified water on the outside of the outer wall.

The present innovation offers solution to shifting and irregular flows of wastewater. In case when no wastewater flows in over a longer period of time, the phytosystem remains in its functional capacity due to internal recycling of nutrients and metabolic stability. As the phytosystem matures, the total amount of nutrients retained within the phytosystem also increases. Especially in forms less available to plants and animals such as lignin, tannin or humic acid. This has implications for the CO₂ - / carbon cycle within the phytosystem which serves as a net-sink for CO₂ or can at least be carbon-neutral. Microbial populations influence carbon storage in plants by enhancing their growth through interactions with organic compounds within the rhizosphere, by providing nutrients such as phosphorus and nitrogen. On the other hand, higher vegetation is known to release substantial amount of dissolved organic carbon in form of vitamins, enzymes, chelators, etc. which enriches the purified water and creates favorable conditions for growth of invertebrates.

The observed plant root - bacteria association was highly host specific. High density of gram-negative obligate aerobic rods was observed. The same high host specificity was valid for invertebrates (protozoa) that are important to maintain the phytosystem's functional stability. Shifts in microbial communities are believed to be responsive to such factors as release of plant exudates, oxygen and carbon translocation into roots and oxygen conditions in the bio-bed. Continuous flow of highly oxygenated water with nutrients and organic compounds and relatively stable temperature within the bio-bed result in fast metabolic turnover of plants, associated microbial communities and invertebrates.

For the degradation processes to run correctly, it's necessary that energy for aeration is sequentially and optimally supplied in a controllable way. It's necessary to supply organic substrate (sewage) and to remove excessive biomass produced by microorganisms. The observed high intensity of treatment processes in the phytosystem results from long contact time of the sewage with the extended bio-available surface area and the volume of the entire bio-bed and intensive oxygen supply is also displayed by an inverted vertical oxygen distribution throughout the system. Consequently, the wastewater retention time in this phytosystem can be reduced to one day, while the overall external energy demand remaines at the level of < 35 Watt per person equivalent (PE). This low energy consuming phytosystem can be powered independently from a central electricity grid, by applying simple solar or wind electricity generators.

Furthermore, the phytosystem of the present invention can be designed to operate with filamentous green algae in the hydroponic part of the biological bed, instead of higher aquatic and bog plants. Reduced evapo-transpiration in such case will allow higher volumes of purified water to be reused for irrigation, ground water recharging and other economic and environmental purposes.

Phosphorus absorption media of the type PhosLock ® or Polonite® in combination with other mineral absorbers can be used in the outflow of purified water to further reduce and recycle phosphorus and to balance the ratio of nitrogen:phosphorus (N:P) in the ultimate water recipients. The system design is flexible and can be individually tailored to meet local or specific requirements. The phytosystem's function and performance can be augmented by remote electronic monitoring and control.

Because of the unique combination of intensive aeration, high liquid velocity and enhanced and stable microbial processes in the bio-bed, the phytosystem of the present invention can be designed for residential sewage with high BOD loading and with flows ranging from one m³/ day to 250 m³/ day. Functional flexibility of the phytosystem allows for its application to treatment of landfill leachates, polishing of effluents from conventional wastewater treatment plants, or it can be used as a tool in restoration of degraded freshwaters. It also provides effective treatment of certain industrial wastewaters, including those containing man-made endocrine disrupting chemicals (EDC) and polyaromatic hydrocarbons (PAH).

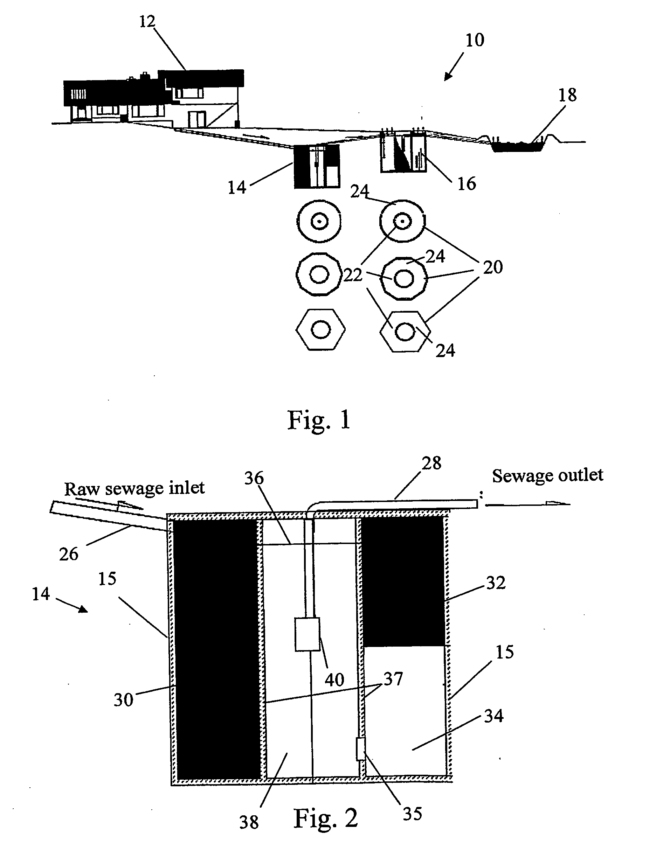

Fig. 1 schematically illustrates the sewage purifying phytosystem 10, where sewage is received from a residential building 12. It is appreciated that the phytosystem 10 also operates in industrial applications. Moreover, the sewage from the residential building 12 is provided to the dynamic pretreatment system 14 of the present invention and pretreated sewage flows to the purifying container 16 of the present invention, where it is purified in accordance with the present description. When the sewage is purified into clean water it is either recycled and reused or released into the ground or to a final receiver for instance a pond 18.

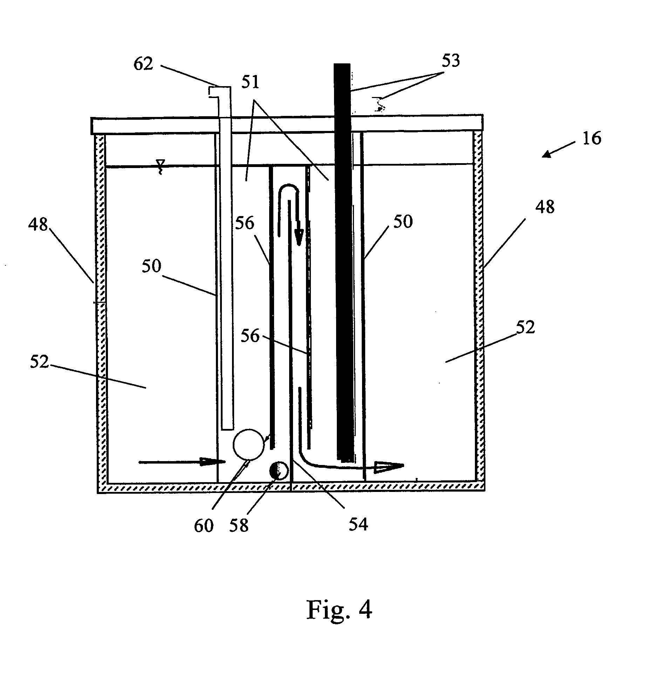

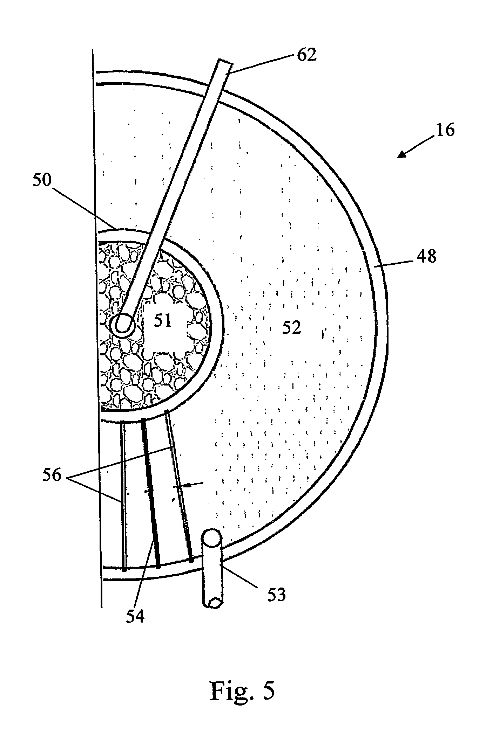

A purifying container 16 can be precast in many different outer shapes 20, as well as the septic tank 14 of which those in Fig. 1 are examples not intended to limit the invention only to those. The inner cylindrical wall 22 and a channel 24 of the container are also depicted in Fig.1. In one preferred embodiment the container 16 is mechanically constructed in the same manner as the septic tank 14, but without a lid and separating and deflecting walls as is depicted in Fig. 4 and Fig. 5.

The present invention or the first time applies composite light concrete with micro-fibrous reinforcement or glass-fiber reinforced plastic, GRP, or polyurethane to achieve an inexpensive container, comparable with other construction materials or prefabricated plastic containers, lightweight, watertight, durable, easy to transport and install with internal surface of low friction to ensure desirable hydraulic behavior of the circulating water. By applying innovative construction materials, the entire phytosystem becomes less expensive, more affordable to communities, more reliable and the time required for manufacturing and onsite installation is significantly shorter than any other constructions of the same volume used so far.

Other fields of application for the phytosystem are for instance: treatment of contaminated leachates, polishing of effluents from conventional wastewater treatment plants, and as a tool in restoration of degraded freshwaters. The present invention phytosystem with its containers 14, 16 differs from other biological treatment systems where sewage flow is linear, 'plug flow', as in WO 03042114 A1, by applying a sequential flow. The number of channels and their dimension are designed for optimal treatment. Integrated biological beds placed in circulation channels mimic natural biocenoses in lakes and wetlands. Circulation channels comprise the system of joint vessels. It means that any inflow of sewage to the outer channel 24 causes an outflow of the equivalent amount of purified water from the internal cylindrical tank.

Constantly forced flow of fluid close to the bottom of the circulation channels leads to recovery of heat transferred from the ground. It provides that the channels do not freeze at external temperatures as low as minus 33°C. An integrated biological bed consists of at least five species of aquatic and bog plants and several hundred species of invertebrates, coexisting with the plant rhizosphere. It results not only in breaking down organic matter but also in continuous consumption of particulate organic matter. Hence, contrary to other treatment systems, no excessive sludge or volatile suspended solids (VSS) are produced. Contrary to "low yield" VSS in effluent quoted in WO 03042114 A1. Many species of invertebrates are emerging and in flying forms leave the open phytosystem, which contributes to the onside recycling of organic carbon and other essential nutrients exactly what takes place in open natural ecosystems.

Pretreated sewage is pumped into the first, outer circulation channel of the phytosystem. For a particular phytosystem, e. g. with capacity of 60 m³/day, volume of the outer channel will be approx. 50 m³ including the bio-bed. Assuming an average inflow of sewage to the outer channel of 1000 liters per hour means that already in that channel, the inflowing dose of sewage will be diluted 50 times with purified water in the channel just by making one full circle (25 m). This volume will enter the internal channel only after treatment in the bio-bed with sequential periods of intensive oxidation followed by controlled periods of anaerobic conditions. Every additional circulation channel increases the ratio of purified water to the dosed sewage. In the night, where normally inflow of sewage is at its lowest, water circulates autonomously in channels and is *"ready"* for accepting new sewage doses in the morning. This phytosystem has many analogies with biological self-purification occurring in rivers. However, in case of the present invention, phytosystem has much higher efficiency than natural linear processes. Visually, the invented process can be compared to a stream passing through several ponds in which it has to flow, at least once along the perimeter of the pond.

Low temperatures in winter slow down biochemical and biological processes leading to lower efficiency of biological treatment systems. Contrary to natural water bodies where temperature on the water surface drops to zero, the present invention, by forced movement of bottom water up and predesigned liquid circulation continuously transfers geothermal heat to the integrated biological bed. This accomplishes that even in harsh winters water temperature in the bio-bed oscillates between 4 and 8 °C.

In the winter, also denitrification processes slow down significantly. In the growing season, root mass actively absorbs nitrates formed during intensive sewage aeration. In winter, this process slows down due to lower temperature and lack of sufficient supply of organic carbon indispensable for the denitrification process (BOD₅ in the effluent water is consequently below 3 mg/liter).

To increase the intensity of denitrification rates, controlled switching from the state of intensive oxidation to the state of anoxy is applied when in operation. In addition, a predefined part of the purified water effluent is recycled back to the denitrifying compartment of the MSS.

An extended surface area of one cubic meter of a bio-block alone is approx. 300 square meters and increases at least hundred times with increasing mass of macrophyte roots. In the channel 24 a vortex mechanical device is installed according to the present invention.

One embodiment of the present invention applies as a standard selected aquatic and bog plants of for instance the following genus: sedge (Carex), bulrush *(Typha)* and sweet-flag (*Acorus*), which in their extensive rhizosphaere provide key habitats for sustaining high invertebrate (protozoa) population. Invertebrate grazing prevents excessive biofilm growth and biomass accumulation. Two other plants, genus: water mynth *(Mentha)* and water-plantain *(Alisma)* can be added for their apparently beneficial role in biocenose development, due to root exudates of dissolved organic carbon and enzymes. The roots and rhizomes of the selected plants have beneficial effect on the microstructure of the biological bed and they stimulate development and growth of nitrifying bacteria. The phytosystem with its container can also utilize bamboo and other plants for economic and aesthetic purposes as well as for an improved treatment process.

Due to a balanced application of biological, hydraulic and physical processes, it was possible to increase the efficiency of the phyto system by at least 200 % compared to any earlier know biological systems. Consequently, the retention time of the phytosystem could be reduced to 1 - 2 days. The present invention applies standardized prefabricated tubular bio-blocks with defined mechanical parameters like density, porosity and buoyancy, hence the functional parameters of the integrated biological bed (bio-bed) can be designed precisely.

By combining specific and extensive root systems of selected aquatic and bog plants with defined structures of the bio-bed media, an exceptionally high extended biologically available surface area was achieved. The extended bio-active surface is highly correlated with intensity of microbial processes responsible for decomposition of organic material. Thus it claims that this combination of mechanical and physiological features, created bio-bed with unique functional capacity to treat efficiently wastewater with higher flow rates and higher nutrient loading over shorter periods of time, without investments in additional energy inputs, addition of chemicals or other upgrading measures normally used in other treatment systems.

Because the present invention applies vortex principles for water movement for aeration and circulation of water, a unique functional flexibility of the entire phytosystem was achieved. Application of vortex improved desired aeration, intensive oxygenation and particle flotation within the phytosystem, it enhanced growth of the plant rhizosphere, it allowed for instant switching from aerobic to anaerobic conditions while utilizing a very low amount of external energy.

By applying vortex aeration and circulation, a simultaneous vertical and horizontal flow of high turbulence was achieved. This claims the first case of such advantageous application of a low energy vortex device in circular compartments containing a significantly shortened treatment process, and makes it significantly less expensive. The aeration and circulation cycles or sequences are significantly better to steer and to control.

Fig. 2 schematically illustrates a cross view of a multifunctional septic system (MSS) comprising a septic container 14 adapted to pretreatment of sewage in accordance with the present invention of the phytosystem. This combination of mechanical and biological features in system 10, where sewage is received from a residential building 12 is very efficient. Moreover, the sewage from the residential building 12 is pre-treated in a pretreatment container 14 providing pretreated sewage to the phytosystem 10, where the sewage is further treated to be purified in accordance with desired quality norms. When the sewage is purified into clean water in the purifying container 16 it can optionally be discharged to a final receiver, for instance a pond 18.

A container 14 can be formed in many different outer shapes 20 of which those in Fig. 1 are examples not intended to limit the invention only to those. The inner cylindrical wall 37 of the container 14 is depicted in Fig. 2.

In Fig. 2, the container 14 is equipped with a raw sewage inlet 26, and an outlet 28 for pretreated sewage. The MSS is in one embodiment in a shape of a watertight cylindrical container 14, 200 cm in diameter, with an axially positioned inner compartment 38, 80 cm in diameter. A pump 40 is depicted in Fig. 2, which stirs the sewage in the inner compartment 38 while dosing the sewage to the phytosystem. The entire construction is made out of precast composite concrete reinforced with polymeric microfibers or precast as a polyurethane container. Both the cylindrical container 14 and the inner compartment 38 are 200 cm high. The container has a bottom plate and a plastic lid. The inner compartment 38 is connected by a bypass 35, 10 cm in diameter situated above a lower ridge of the inner cylindrical wall 37 bypassing sewage water into the inner compartment 38 to be pumped out through an outlet 28 for pretreated sewage water. The adjacent channel 34 l s between transept walls: 30 and 32. One wall 30 is located next to the inlet of raw sewage 26 and is 200 cm high and 60 cm wide, and stretches water tightly from the top of the container 14 to the bottom of the same, attached between an outer wall 15 and an inner wall 37. The outer wall 15 and the inner wall 37 are making up an outer compartment/channel.

The other transept wall 32 has length equal to 50 % of the wall 30 and is situated at the opposite side of the channel and serves as a deflector by dividing the outer compartment into two halves. The upper wall 32 deflecting fluids between the two halves of the outer compartment through an opening in the wall, and operating as a scum barrier, and the lower half connects both sides of the wall 30, 32 with a channel which allows for free movement of fluid while the upper half 32 prevents sewage scum from entering a bio-bed compartment.

The wall 30 reaches from the bottom of the compartment to approx. the top of the compartment. A second deflecting transept wall 32 begins at the top of the compartment and leaves a specific opening above the bottom of the compartment in one embodiment of the present invention equal to 1/2 of the transept's length as a specific part of the total length of the transept. This is not the case in document KR 20030044647 where the opening in the transept wall is not serving as a deflecting mechanism. The system in KR 20030044647 operates on activated sludge, and there is no need for a scum barrier.

Moreover the container 14 could be manufactured in the same manner as the container 16 as depicted in Fig. 4 and Fig. 5 regarding the inlet 26, outer compartment, inner compartment 38, bypass 35, and an outlet 28.

For the first time composite light concrete with micro-fibrous reinforcement and polyurethane-polyvinyl is applied in accordance with the present invention, to achieve an inexpensive, compared to other construction materials or prefabricated plastic containers, lightweight, watertight, durable easy to transport and install compartment. By applying this construction material, the MSS became less expensive, more affordable to communities and more reliable.

The present invention system 10 with its utilized containers 14, 16 differs from other pre-treatment systems where sewage flow is usually passive between the compartments. A deflected forced sewage flow in the functionally distinctly different compartments of the container 14 leads to excellent recovery of heat transferred from the ground and heat retained from the inflowing sewage. It provides that liquid does not freeze at external temperatures as low as minus 33°C. Processes of sedimentation, de-nitrification and phosphorus reduction are relatively stable. Hence, contrary to conventional septic tank systems, there is no excessive sludge accumulation. By applying standardized prefabricated fillings with defined mechanical parameters like density, porosity and buoyancy, the functional parameters of the anoxic and aerated bio-bed can be designed precisely.

An extended bio-active surface is highly correlated with bio-film development, intensity of microbial processes responsible for decomposition of organic material and reduction of nitrates. Thus it is claimed that this combination of mechanical and biological features comprises a simple system with unique functional capacity to pre-treat sewage efficiently with higher flow rates and higher nutrient loading over shorter periods of time, without investments in additional energy, chemicals or extensive sewage discharge systems conventionally utilized. Through the present invention integrated biological and mechanical functions are consolidated in one cylindrical container. There are mainly four technological contributions such as; mechanical sedimentation of organic and inorganic particles; biological pretreatment (aerobic decomposition and anoxic processes such as de-nitrification and phosphorus reduction); aeration; and pumping of pretreated sewage outside the system. The MSS offers an ideal solution to sewage flow between 1 and 10 m³/day prior to final biological treatment in the phytosystem 10 or can serve as the only mechanical-biological treatment in conjunction with discharge to soil drainage, wetlands, lagoons or ponds where final natural polishing of sewage may take place. Efficiency of treatment by the MSS is considerably higher than the current European water quality norms require.

Inside the internal tank 38, a prefabricated high porosity tubularfilling (300m²/m³) is placed. The filling serves as an additional aerobic bio-bed and as supporter for a submerged sewage dosing pump. The pump is equipped with a water level sensor and a timer and optionally with an air-jet aerator that can aerate the aerobic bio-bed below. The MSS is covered by a lid made out of reinforced polyethylene (HDPE) with manholes, 60 cm in diameter allowing access to the pump and 20 cm in diameter for evacuation of inorganic sediment. Optionally the lid may be equipped with a chimney allowing access to the tank when the MSS has to be placed deeper in the ground. The outlet pipe from the submerged pump is situated at the ridge of the MSS container. The horizontal outlet pipe leads pretreated sewage outside the system and it is connected with the vertical pipe by a rectangular shunt joint. Half of the cylindrical MSS between the transept walls serves as sedimentation chamber. The other half of the MSS is filled in by an anaerobic bio-bed that considerably upgrades processes of pretreatment and allows for optional recirculation of water treated in the PhytoSystem in order to intensify the process of denitrification. The volume of the anoxic bio-bed is 2 m³ but the biologically active extended surface area exceeds 300m²/m³.

Raw sewage undergoes a settlement process in the first half of the MSS where part of the solids will sediment and the other part will form surface scum that undergoes slow decomposition. Partly purified sewage moves on to the next compartment with the bio-bed where processes in the developed bio-film will treat it further. The bio-bed has an anaerobic character allowing for accelerated denitrification and biological reduction of phosphorus, especially when treated water from the phytosystem 10 is being recycled. After passing through the bio-bed, the pretreated sewage enters the internal tank with the submerged dosing pump. When the predetermined water level is reached, the sensor switches on the pump which pumps the sewage outside the container. On the way to the final discharge or further treatment in the phytosystem 10, the pretreated sewage can be aerated by an air-jet located on the vertical part of the outlet pipe.

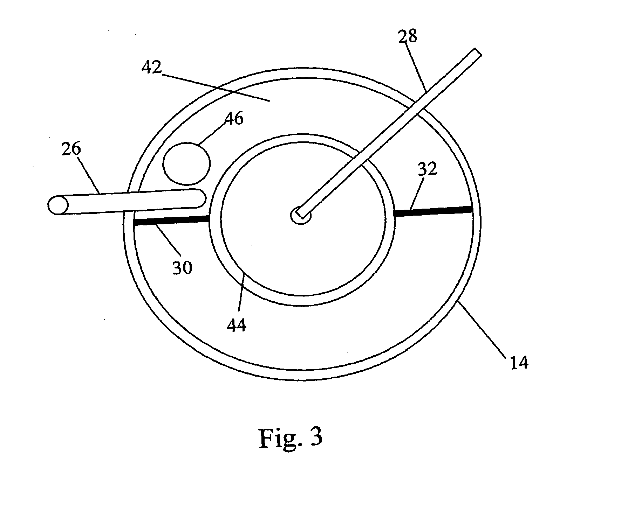

Dimensions of the MSS quoted above assure a working volume of the sewage at approx. 4 m³, which for a single household would mean a sewage retention time of 3 to 4 days. Periodical evacuation of the accumulated inorganic sediment from the sedimentation chamber, by reversing the flow of liquid will flush the two compartments and the internal tank. The MSS can be installed as an autonomous sewage treatment unit for one household, equipped with a bio-bed, own pump and aeration system. In such a set-up, pretreated sewage can be further treated by trench systems or soil bed drainage. It can also be discharged to ponds or lagoons with aquatic vegetation. An own pump system allows for discharge of pretreated sewage according to local conditions and requirements. Fig. 3 schematically illustrates a top view of a septic container 14 in Fig.2 for pretreatment of sewage in accordance with the present invention. A sedimentation compartment is situated under the lid 42 at the upper part in Fig.3 between the two transept walls 30, 32, whereby the wall 32 is a deflecting wall. The compartment beneath the upper compartment and under the lid 42 in Fig. 3 is a biological denitrification bed consisting of tubular netting. The internal cylindrical tank 38 consists of tubular netting and a fine-mesh netting forming the base for the submersible dosing pump 40 supplying pretreated sewage/wastewater to the conventional soil-based treatment or to the phytosystem - in such a case it can be named a "tandem system" (MSS + container 16).

The wall 30 is a vertical watertight wall of the height equal the height of the container/tank 14. A deflecting wall 32 is approximately 1/2 of the wall 30 in one embodiment of the present invention. It forces the down-flow of sewage beneath the biological denitrification bed.

Hence, the present invention offers a dynamic system 10 as a replacement of conventional passive systems, known as 2- or 3-compartment septic tanks, with all environmental advantages that follow the improvements described herein.

Furthermore, Fig. 3 depicts a manhole 44 to provide access to maintain the dosing pump 40. Also a manhole 46 is depicted through which the inorganic sediment from the container 14 is sucked out of the container whenever necessary, for example every ten years for a household container. The septic container 14 can also be applied to store and pre-treat industrial wastewater prior to treatment in the phytosystem.

Fig. 4 illustrates a container 16 with an outer wall 48, herein cylindrical but other shapes are possible, and the container 16 also has an inner cylindrical wall 50. The inner wall 50 forms an inner compartment 51, and the outer wall 48 forming an outer compartment-channel 52. Sewage water is inlet to the outer compartment 52 through an inlet 53 circulating the sewage water in the outer compartment 52 in accordance with the arrows in Fig. 4. Moreover, the outer compartment has three walls attached in a radius fashion to the outer wall 48 and the inner wall 50, whereby wall 54 is attached to the tank bottom and reaching approximately 20 cm below water level. Whereas the walls 56 each one are positioned on each side of the wall 54 reaching approximately up to the water level and ending approximately 20 cm from the bottom of the container, which allows water to flow between the walls 54, 56 in accordance with the arrows in Fig. 4. This is an innovative embodiment allowing sewage water to re-circulate in the outer compartment 48. In one embodiment of the present invention an air diffuser 58 creates an effect of an air-lift pump between walls 54 and 56, enhancing vortex and waterfall movement of water and the circulation in compartment 48.

A whole 60 in the inner tank wall 50 acts as a bypass for treated sewage water to enter the inner compartment 51 and finally to an outlet of purified water shown in Fig. 5.

In Fig. 5 it is schematically illustrates a container 16 according to Fig. 4 in a cut upper elevation view with an outer wall 48 and an inner wall 50 with their compartments 51, and 52, respectively. The circulation walls 54, 56 are depicted in an upper elevation view as well as an inlet 53 for sewage water and an outlet 62 for purified water to be transported for instance to a pond 18. The inner compartment 51 can in one embodiment of the present invention contain a predetermined amount of a mineral adsorber filling such as Phoslock® or Polonite® for the adsorption of the dissolved phosphorus in the outflowing purified water. As for the outer compartment 52 it contains a bio-bed in accordance with the present invention.

The container 14 is located underground in such a way that the raw sewage can enter gravimetrically into the sediment compartment 42, Fig. 3, which is not the case in document KR 20030044647. The pretreated sewage leaves the internal compartment 51 via a predetermined dosing from a submerged pump (not shown) which is not the case in KR 20030044647. Although the pump is not shown it could be inserted as the pump shown in Fig. 2 for the septic tank 14. A predetermined part of the purified water is gravimetrically recycled back to the denitrifying compartment for further denitrification of the nitrates. This is not the case in KR 20030044647 where permeate is vacuum pumped out of the system, and no further treatment of water is mentioned.

The present invention is not limited to given examples and embodiments, but to what a person skilled in the art can derive from the attached set of claims.

## Claims

1. A pretreatment container (14) for use in pretreatment of residential sewage and industrial wastewater, comprising:
at least one watertight outer wall (15) with a lid (42) having an inlet (26) configured for receiving raw sewage water and an outlet (28) configured for discharging pretreated sewage water both positioned at the upper ridge of the container;
an inner watertight wall (37) constituting an inner compartment (38) comprising said outlet (28);
said outer wall (15) and said inner wall (37) constituting an outer compartment;
a first watertight wall (30) dividing the outer compartment in two parts from top to bottom of the outer compartment; and
a second wall (32) dividing the outer compartment from the top of the container, down to an opening configured to permit sewage water to deflect and flow in a channel (34) between the outer compartments' first and second walls (30, 32), the second wall (32) being configured to constitute a scum barrier at the top of the outer compartment;
a bypass (35) connecting the outer compartment and the inner compartment (38) situated above a lower ridge of the inner wall (37), said bypass (35) being positioned on the opposite side of the first wall (30) where said raw sewage inlet (26) is positioned; and
a pump means (40) connected to said outlet (28) in said inner compartment (38), said pump means (40) being configured to create a sequential flow of fluids,
wherein the outer compartment of the pretreatment container (14) is provided with an anaerobic denitrifying bio-bed, and the inner compartment (38) of the pretreatment container (14) is provided with a perforated aerobic bio-bed.

2. A pretreatment container according to claim 1, wherein the inner compartment (38) is filled with a porous prefabricated filling for aerobic pretreatment.

3. A purifying container (16) for use in treatment of residential sewage and industrial wastewater, comprising:
an open to the atmosphere watertight at least one outer wall (48) having an inlet (53) configured for receiving pretreated sewage water and an outlet (62) configured for discharging purified water both positioned at the upper ridges of the container;
an inner watertight wall (50) constituting an inner compartment (51);
said outer wall (48) and said inner wall (50) constituting an outer compartment (52);
said inlet (53) being configured to release pretreated sewage into said outer compartment (52) in a sequential flow;
said outlet (62) being configured to release purified water from said inner compartment (51);
a first watertight transept wall (54) being attached to the bottom of the outer compartment (52) between said outer wall (48) and inner wall (50) configured to extend upwards to a level beneath a water level of said container (16);
a second transept wall (56) and a third transept wall (56) each positioned on both sides of the first watertight transept wall (54) being attached to the outer wall (48) and the inner wall (50) configured to protrude from the water level of the container (16) towards the bottom of the container (16) leaving equal openings in the bottom part configured to allow fluid to pass through, and
together with said first watertight transept wall (54) configured to form waterfall and vortex effects in the outer compartment (52);
a bypass (60) configured to pass fluid between said outer compartment (52) and said inner compartment (51);
an air diffuser (58) configured to air-lift fluid between the first watertight transept wall (54) and second transept wall (56), configured to form the waterfall flow between the first watertight transept wall (54) and third transept wall (56) to vortex circulation in said outer compartment (52);
a pump means configured for pumping in predetermined doses of pretreated sewage and by means of hydraulic pressure difference lead to the outflow of equivalent doses of purified water through the outlet in the center of the inner cylindrical container; and
built out of precast modules of at least one of composite light concrete with micro-fibrous reinforcement, glass-fiber reinforced plastic, and polyurethane,
wherein the purifying container (16) is provided with a bio-bed comprising selected aquatic and bog plants.

4. A purifying container according to claim 3, wherein the bio-bed in said container (16) comprises selected aquatic and bog plants of at least one of the following four genus combinations sedge and bulrush, sedge and sweet-flag, bulrush and sweet-flag and sedge, and bulrush and reed, which in their rhizosphere provide key habitats for sustaining a high invertebrate population, whereby invertebrate grazing prevents excessive biofilm and biomass accumulation; and
water mynth and water-plantain are provided to said purifying container (16) for their beneficial role in biocenose development and continuous supply of dissolved organic carbon; and
selected aquatic and bog plants are provided in said purifying container (16) for sustaining microbial processes and invertebrate grazing in a biological bed, preventing any accumulation of biosolid or any odors being produced in decomposition processes.

5. A purifying container according to claim 3, wherein the bio-bed is an integrated biological bed consisting of the selected aquatic and bog plants and prefabricated porous polyethylene tubular blocks with supporting media for selected aquatic and bog plants, said integrated biological bed occupying upper parts of said outer compartment (52), the remaining unobstructed space beneath the integrated biological bed being configured to allow fast circulation of oxygenated water and dosed pretreated sewage.

6. A purifying container according to claim 3, wherein said inner compartment (51) is connected to a perforated vertical pipe closed at the bottom, and a shunt outlet located below the upper ridges of said inner compartment (51), said outer compartment (52), and said perforated vertical pipe optionally accommodating a coronary discharge ozone generator and an electronic monitoring device.

7. A purifying container according to claim 3, wherein said inner compartment (51) is filled with a mineral with phosphorus adsorption capacity.

8. A phytosystem (10) configured to provide treatment of at least one of residential sewage (12) and industrial wastewater, comprising:
a pretreatment container (14) for pretreatment of sewage according to claim 1, configured to receive said sewage and wastewater through an inlet (26) connected to the at least one of a residential sewage (12) and industrial wastewater release;
a purifying container (16) according to claim 3, configured to receive pretreated sewage and wastewater pumped from the outlet (28) of the container (14) through a connection with the inlet (53) of the container (16); and
an outlet (62) configured to discharge purified water.

9. A phytosystem according to claim 8, wherein the outer compartment of said container (14) further comprises a sedimentation compartment.

10. A method of treating at least one of residential sewage (12) and industrial wastewater utilizing a pretreatment container (14) according to claim 1 or 2.

11. A method of treating at least one of residential sewage (12) and industrial wastewater utilizing a purification container (16) according to anyone of claims 3-7.

12. A method of treating at least one of residential sewage (12) and industrial wastewater utilizing a phytosystem (10) according to claim 8 or 9.

13. Use of a pretreatment container (14) according to claim 1 or 2 for treating at least one of residential sewage (12) and industrial wastewater.

14. Use of a purification container (16) according to anyone of claims 3-7 for treating at least one of residential sewage (12) and industrial wastewater.

15. Use of a phytosystem (10) according to claim 8 or 9 for treating at least one of residential sewage (12) and industrial wastewater.

## Patentansprüche

1. Vorbehandlungsbehälter (14) zur Verwendung bei der Vorbehandlung von Haushaltsabwasser und Industrieabwasser, umfassend:
mindestens eine wasserdichte Außenwand (15) mit einem Deckel (42), der einen Einlass (26) aufweist, der zum Aufnehmen von Rohabwasser konfiguriert ist, und einen Auslass (28), der zum Ablassen des vorbehandelten Abwassers konfiguriert ist, aufweist, wobei beide am oberen Behälterrand angeordnet sind;
eine wasserdichte Innenwand (37), die eine innere Kammer (38) bildet, die den Auslass (28) umfasst; wobei die Außenwand (15) und die Innenwand (37) eine äußere Kammer bilden;
eine erste wasserdichte Wand (30), welche die äußere Kammer in zwei Teile von oben nach unten der äußeren Kammer teilt; und
eine zweite Wand (32), welche die äußere Kammer von der Oberseite des Behälters bis nach unten zu einer Öffnung teilt, die konfiguriert ist, um Abwasser abzulenken und in einen Kanal (34) zwischen den ersten und zweiten Kammerwänden (30, 32) zu leiten, wobei die zweite Wand (32) konfiguriert ist, um eine Schwimmschlammsperre an der Oberseite der äußeren Kammer zu bilden;
einen Bypass (35), der die äußere Kammer und die innere Kammer (38), die über einem oberen Rand der Innenwand (37) angeordnet sind, verbindet, wobei der Bypass (35) auf der gegenüberliegenden Seite der ersten Wand (30) angeordnet ist, auf der auch der Rohabwassereinlass (26) angeordnet ist; und
ein Pumpmittel (40), das mit dem Auslass (28) in der inneren Kammer (38) verbunden ist, wobei das Pumpmittel (40) konfiguriert ist, um eine sequentielle Fluidströmung zu erzeugen,
wobei die äußere Kammer des Vorbehandlungsbehälters (14) mit einem anaeroben Denitrifikationsbiobett bereitgestellt ist, und die innere Kammer (38) des Vorbehandlungsbehälters (14) mit einem perforierten aeroben Biobett bereitgestellt ist.

2. Vorbehandlungsbehälter nach Anspruch 1, wobei die innere Kammer (38) mit einem porösen vorgefertigten Füllstoff für die aerobe Vorbehandlung gefüllt ist.

3. Reinigungsbehälter (16) zur Verwendung bei der Behandlung von Haushaltsabwasser und Industrieabwasser, umfassend:
mindestens eine offene zur Atmosphäre wasserdichte Außenwand (48) mit einem Auslass (53), der zum Aufnehmen von vorbehandeltem Abwasser konfiguriert ist, und einem Auslass (62), der zum Ablassen des gereinigten Wassers konfiguriert ist, wobei beide am oberen Behälterrand angeordnet sind;
eine wasserdichte Innenwand (50), die eine innere Kammer (51) bildet;
wobei die Außenwand (48) und die Innenwand (50) eine äußere Kammer (52) bilden;
wobei der Einlass (53) zum Freigeben von vorbehandeltem Abwasser in die äußere Kammer (52) in einer sequentiellen Strömung konfiguriert ist;
wobei der Auslass (62) zum Freigeben von gereinigtem Wasser aus der inneren Kammer (51) konfiguriert ist;
wobei eine erste wasserdichte Querwand (54) mit der Unterseite der äußeren Kammer (52) zwischen der Außenwand (48) und der Innenwand (50) befestigt ist, und konfiguriert ist, sich nach oben zu einem Füllstand unterhalb eines Wasserfüllstands in dem Behälter (16) zu erstrecken;
wobei eine zweite Querwand (56) und eine dritte Querwand (56), die jeweils auf beiden Seiten der ersten wasserdichten Querwand (54) angeordnet sind, an der Außenwand (48) und der Innenwand (50) befestigt sind, und konfiguriert sind, aus dem Wasserfüllstand des Behälters (16) in Richtung der Unterseite des Behälters (16) vorzustehen, wodurch gleiche Öffnungen im unteren Teil belassen werden, die zum Durchlassen von Fluid dadurch konfiguriert sind und zusammen mit der ersten wasserdichten Querwand (54) zum Bilden von Wasserfall- und Wirbeleffekten in der äußeren Kammer (52) konfiguriert sind;
wobei ein Bypass (60) konfiguriert ist, um Fluid zwischen der äußeren Kammer (52) und der inneren Kammer (51) zu leiten;
wobei ein Luftdiffusor (58) zum per Luft Anheben von Fluid zwischen der ersten wasserdichten Querwand (54) und der zweiten Querwand (56) konfiguriert ist, die zum Bilden der Wasserfallströmung zwischen der ersten wasserdichten Querwand (54) und der dritten Querwand (56) zum Verwirbeln der Zirkulation in der äußeren Kammer (52) konfiguriert sind;
ein Pumpmittel, das zum Pumpen in vorbestimmten Dosen von vorbehandeltem Abwasser und mittels eines hydraulischen Druckunterschieds zum Abfließen von äquivalenten Dosen aus gereinigtem Wasser durch den Auslass in der Mitte des inneren zylindrischen Behälters konfiguriert ist; und Ausbilden von vorgefertigten Modulen aus mindestens einem von Verbundstoffleichtbeton mit Mikrofaserverstärkung, glasfaserverstärktem Kunststoff und Polyurethan, wobei der Reinigungsbehälter (16) mit einem Biobett bereitgestellt ist, das ausgewählte Wasser- und Sumpfpflanzen umfasst.

4. Reinigungsbehälter nach Anspruch 3, wobei das Biobett in dem Behälter (16) ausgewählte Wasser- und Sumpfpflanzen aus mindestens einer der folgenden vier Gattungskombinationen umfasst: Riedgras und Binsen, Riedgras und Kalmus, Binsen und Kalmus und Binsen und Schilf, die in ihrer Rhizosphäre wichtige Lebensräume für die Gewährleistung einer hohen wirbellosen Population bereitstellen, wobei die wirbellose Äsung einen übermäßigen Biofilm und eine Biomasseakkumulation verhindert; und
Wasser-Mynth und Froschlöffel dem Reinigungsbehälter (16) aufgrund ihrer vorteilhaften Rolle bei der Biozönose-Entwicklung und kontinuierlichen Zufuhr von gelöstem organischen Kohlenstoff bereitgestellt werden; und
ausgewählte Wasser- und Sumpfpflanzen in dem Reinigungsbehälter (16) für die Erhaltung der mikrobiellen Prozesse und Wirbellosen-Äsung in einem Biobett bereitgestellt werden, die jegliche Ansammlung von biologischen Feststoffen oder Gerüchen, die bei Zersetzungsverfahren entstehen, verhindern.

5. Reinigungsbehälter nach Anspruch 3, wobei das Biobett ein integriertes biologische Bett ist, das aus den ausgewählten Wasser- und Sumpfpflanzen und vorgefertigtem porösen Polyethylenrohrblöcken mit Stützmitteln für ausgewählte Wasser- und Sumpfpflanzen besteht, wobei das integrierte biologische Bett die oberen Teile der äußeren Kammer (52), einnimmt und der verbleibende freie Raum unter dem integrierten biologischen Bett zum Ermöglichen der schnellen Zirkulation von sauerstoffreichem Wasser und dosiertem vorbehandelten Abwasser konfiguriert ist.

6. Reinigungsbehälter nach Anspruch 3, wobei die innere Kammer (51) mit einer perforierten vertikalen Rohrleitung, die an der Unterseite geschlossen ist, und mit einem Nebenauslass verbunden ist, der unter den oberen Rippen der inneren Kammer (51) angeordnet ist, wobei die äußere Kammer (52) und die perforierte vertikale Rohrleitung wahlweise einen Koronarablass-Ozongenerator und eine elektronische Überwachungsvorrichtung aufnehmen.

7. Reinigungsbehälter nach Anspruch 3, wobei die innere Kammer (51) mit einem phosphorabsorptionsfähigen Mineral gefüllt ist.

8. Phytosystem (10), das zum Bereitstellen der Behandlung von mindestens einem von Haushaltsabwasser (12) und Industrieabwasser konfiguriert ist, umfassend:
einen Vorbehandlungsbehälter (14) zur Vorbehandlung von Abwasser nach Anspruch 1, der zum Aufnehmen des Abwassers und Schmutzwassers durch einen Einlass (26) konfiguriert ist, der mit mindestens einem von Haushaltsabwasser- (12) und Industrieabwasserfreisetzung verbunden ist;
einen Reinigungsbehälter (16) nach Anspruch 3, der zum Aufnehmen des vorbehandelten Abwassers und Schmutzwassers konfiguriert ist, das von dem Auslass (28) des Behälters (14) durch eine Verbindung mit dem Einlass (53) des Behälters (16) gepumpt wird; und
einen Auslass (62), der zum Ablassen von gereinigtem Wasser konfiguriert ist.

9. Phytosystem nach Anspruch 8, wobei die äußere Kammer des Behälters (14) ferner eine Sedimentationskammer umfasst.

10. Verfahren zur Behandlung von mindestens einem von Haushaltsabwasser (12) oder Industrieabwasser unter Verwendung eines Vorbehandlungsbehälters (14) nach Anspruch 1 oder 2.

11. Verfahren zur Behandlung von mindestens einem von Haushaltsabwasser (12) oder Industrieabwasser unter Verwendung eines Reinigungsbehälters (16) nach einem der Ansprüche 3 bis 7.

12. Verfahren zur Behandlung von mindestens einem von Haushaltsabwasser (12) oder Industrieabwasser unter Verwendung eines Phytosystems (10) nach Anspruch 8 oder 9.

13. Verwendung eines Vorbehandlungsbehälters (14) nach Anspruch 1 oder 2 zur Behandlung von mindestens einem von Haushaltsabwasser (12) und Industrieabwasser.

14. Verwendung eines Reinigungsbehälters (16) nach einem der Ansprüche 3 bis 7 zur Behandlung von mindestens einem von Haushaltsabwasser (12) und Industrieabwasser.

15. Verwendung eines Photosystems (10) nach Anspruch 8 oder 9 zur Behandlung von mindestens einem von Haushaltsabwasser (12) und Industrieabwasser.

## Revendications

1. Récipient de prétraitement (14) à utiliser pour le prétraitement d'eaux d'égout domestiques et d'eaux usées industrielles, comprenant:
au moins une paroi extérieure étanche à l'eau (15) comprenant un couvercle (42) présentant une entrée (26) configurée pour recevoir des eaux usées brutes, et une sortie (28) configurée pour décharger des eaux usées prétraitées, toutes les deux étant positionnées à la nervure supérieure du récipient;
une paroi intérieure étanche à l'eau (37) qui constitue un compartiment intérieur (38) présentant ladite sortie (28);
ladite paroi extérieure (15) et ladite paroi intérieure (37) constituant un compartiment extérieur;
une première paroi étanche à l'eau (30) qui divise le compartiment en deux parties de haut en bas du compartiment extérieur; et
une deuxième paroi (32) qui divise le compartiment extérieur à partir du sommet du récipient vers le bas jusqu'à une ouverture configurée pour permettre aux eaux usées de dévier et de s'écouler dans un canal (34) entre les première et deuxième parois (30, 32) du compartiment extérieur, la deuxième paroi (32) étant configurée pour constituer une barrière anti-écume au sommet du compartiment extérieur;
une dérivation (35) qui connecte le compartiment extérieur au compartiment intérieur (38) située au-dessus d'une nervure inférieure de la paroi intérieure (37), ladite dérivation (35) étant positionnée sur le côté opposé de la première paroi (30) où ladite entrée d'eaux usées brutes (26) est située;
des moyens de pompe (40) qui sont connectés à ladite sortie (28) dans ledit compartiment intérieur (38), lesdits moyens de pompe (40) étant configurés de manière à créer un écoulement séquentiel de fluides,
dans lequel le compartiment extérieur du récipient de prétraitement (14) comprend un lit biologique dénitrifiant anaérobique, et le compartiment intérieur (38) du récipient de prétraitement (14) comprend un lit biologique aérobique perforé.

2. Récipient de prétraitement selon la revendication 1, dans lequel le compartiment intérieur (38) est rempli d'un agent de remplissage poreux préfabriqué pour un prétraitement aérobique.

3. Récipient de purification (16) à utiliser dans le traitement d'eaux d'égout domestiques et d'eaux usées industrielles, comprenant:
au moins une paroi extérieure étanche à l'eau ouverte vers l'atmosphère (48) présentant une entrée (53) configurée pour recevoir des eaux usées prétraitées, et une sortie (62) configurée pour décharger de l'eau purifiée, toutes les deux étant positionnées aux nervures supérieures du récipient;
une paroi intérieure étanche à l'eau (50) qui constitue un compartiment intérieur (51);
ladite paroi extérieure (48) et ladite paroi intérieure (50) constituant un compartiment extérieur (52);
ladite entrée (53) étant configurée pour décharger des eaux usées prétraitées dans ledit compartiment extérieur (52) en un écoulement séquentiel;
ladite sortie (62) étant configurée pour décharger de l'eau purifiée à partir dudit compartiment intérieur (51) ;
une première paroi de transept étanche à l'eau (54) qui est attachée au fond du compartiment extérieur (52) entre ladite paroi extérieure (48) et ladite paroi intérieure (50) et configurée pour s'étendre vers le haut jusqu'à un niveau situé en dessous d'un niveau d'eau dudit récipient (16);
une deuxième paroi de transept étanche à l'eau (56) et une troisième paroi de transept (56) qui sont chacune positionnées sur les deux côtés de la première paroi de transept étanche à l'eau (54) qui est attachée à la paroi extérieure (48) et à la paroi intérieure (50), configurées pour faire saillie à partir du niveau d'eau du récipient (16) en direction du fond du récipient (16) en laissant des ouvertures égales dans la partie inférieure configurées pour permettre au fluide de passer à travers, et de concert avec ladite première paroi de transept étanche à l'eau (54) configurée pour former une cascade d'eau et des effets de tourbillon dans le compartiment extérieur (52);
une dérivation (60) qui est configurée pour faire passer un fluide entre ledit compartiment extérieur (52) et ledit compartiment intérieur (51);
un diffuseur d'air (58) qui est configuré pour réaliser une remontée pneumatique du fluide entre la première paroi de transept étanche à l'eau (54) et la deuxième paroi de transept (56), configurée pour former l'écoulement en cascade d'eau entre la première paroi de transept étanche à l'eau (54) et une troisième paroi de transept (56) afin de créer une circulation tourbillonnaire dans ledit compartiment extérieur (52);
des moyens de pompe configurés pour pomper des doses prédéterminées d'eaux usées prétraitées et qui, sous l'effet d'une différence de pression hydraulique, conduisent à un écoulement de sortie de doses équivalentes d'eau purifiée à travers la sortie située dans le centre du récipient cylindrique intérieur; et
une accumulation de modules préfabriqués d'au moins soit un béton composite léger comportant un renforcement micro-fibreux, soit un plastique renforcé de fibres de verre, soit du polyuréthane, dans lequel le récipient de purification (16) comprend un lit biologique comprenant des plantes aquatiques et marécageuses sélectionnées.

4. Récipient de purification selon la revendication 3, dans lequel le lit biologique dans ledit récipient (16) comprend des plantes aquatiques et marécageuses sélectionnées d'au moins une des quatre combinaisons de genre suivantes: carex et scirpe, carex et jonc, scirpe et jonc, et carex, scirpe et roseau qui, dans leur rhizosphère, fournissent des habitats clés pour supporter une importante population d'invertébrés, dans lequel le broutage des invertébrés empêche toute accumulation excessive de biofilm et de biomasse; et
la menthe d'eau et le plantain d'eau sont prévus dans ledit récipient de purification (16) en raison de leur rôle bénéfique dans le développement de la biocénose et la fourniture continue de carbone organique dissous; et
des plantes aquatiques et marécageuses sélectionnées sont prévues dans ledit récipient de purification (16) pour supporter des processus microbiens et le broutage des invertébrés dans un lit biologique, empêchant toute accumulation de biosolides ou toute production d'odeurs lors des processus de décomposition.

5. Récipient de purification selon la revendication 3, dans lequel le lit biologique est un lit biologique intégré constitué des plantes aquatiques et marécageuses sélectionnées et de blocs tubulaires préfabriqués de polyéthylène poreux avec des milieux de support pour les plantes aquatiques et marécageuses sélectionnées, ledit lit biologique intégré occupant des parties supérieures dudit compartiment extérieur (52), l'espace inoccupé restant en dessous du lit biologique intégré étant configuré de manière à permettre une circulation rapide d'eau oxygénée et d'eaux usées prétraitées dosées.

6. Récipient de purification selon la revendication 3, dans lequel ledit compartiment intérieur (51) est connecté à un tuyau vertical perforé dont la base est fermée, et une sortie de dérivation située en dessous des nervures supérieures dudit compartiment intérieur (51), ledit compartiment extérieur (52) et ledit tuyau vertical perforé accueillant optionnellement un générateur d'ozone à décharge coronaire et un dispositif de surveillance électronique.

7. Récipient de purification selon la revendication 3, dans lequel ledit compartiment intérieur (51) est rempli d'un minéral qui présente une capacité d'absorption de phosphore.

8. Phytosystème (10) configuré pour réaliser un traitement d'au moins soit des eaux d'égout domestiques (12), soit des eaux usées industrielles, comprenant:
un récipient de prétraitement (14) pour le prétraitement d'eaux usées selon la revendication 1, configuré pour recevoir lesdites eaux d'égout et lesdites eaux usées à travers une entrée (26) qui est connectée à ladite au moins une évacuation d'eaux d'égout domestiques (12) et d'eaux usées industrielles;
un récipient de purification (16) selon la revendication 3, configuré pour recevoir des eaux d'égout et des eaux usées prétraitées pompées à partir de la sortie (28) du récipient (14) à travers une connexion avec l'entrée (53) du récipient (16); et
une sortie (62) qui est configurée pour décharger de l'eau purifiée.

9. Photosystème selon la revendication 8, dans lequel le compartiment extérieur dudit récipient (14) comprend en outre un compartiment de sédimentation.

10. Procédé de traitement d'au moins soit des eaux d'égout domestiques (12), soit des eaux usées industrielles en utilisant un récipient de prétraitement (14) selon la revendication 1 ou 2.

11. Procédé de traitement d'au moins soit des eaux d'égout domestiques (12), soit des eaux usées industrielles en utilisant un récipient de purification (16) selon l'une quelconque des revendications 3 à 7.

12. Procédé de traitement d'au moins soit des eaux d'égout domestiques (12), soit des eaux usées industrielles en utilisant un phytosystème (10) selon la revendication 8 ou 9.

13. Utilisation d'un récipient de prétraitement (14) selon la revendication 1 ou 2 pour traiter au moins soit des eaux d'égout domestiques (12), soit des eaux usées industrielles.

14. Utilisation d'un récipient de purification (16) selon l'une quelconque des revendications 3 à 7 pour traiter au moins soit des eaux d'égout domestiques (12), soit des eaux usées industrielles.

15. Utilisation d'un photosystème (10) selon la revendication 8 ou 9 pour traiter au moins soit des eaux d'égout domestiques (12), soit des eaux usées industrielles.
